# EUROPEAN PATENT SPECIFICATION

(11) **EP 0 407 575 B1**
(45) Date of publication and mention of the grant of the patent: **10.11.1993**
(21) Application number: 89901292.6
(22) Date of filing: 06.01.1989
(51) Int. Cl.: B29C 63/36, B29C 63/34, F16L 41/02, B29L 23/22

(54) **APPARATUS AND INSTRUMENT USED TO LINE BRANCHED PIPE**
GERÄT UND WERKZEUG ZUM AUSKLEIDEN EINES VERZWEIGTEN ROHRES
DISPOSITIF ET INSTRUMENT UTILISES POUR REVETIR UNE CONDUITE A EMBRANCHEMENTS

(43) Date of publication of application: 16.01.1991
(73) Proprietor: ASHIMORI KOGYO KABUSHIKI KAISHA, Osaka-shi, Osaka-fu (JP)
(72) Inventor: SHIMOKAWA, Shinji 1-97, Hamaguchihigashi 1-chome, Osaka 559 (JP); KITA, Katsuo 203, Yamamotohaitsu, Osaka 571 (JP)
(74) Representative: VOSSIUS & PARTNER
(86) International application number: JP8900013
(87) International publication number: WO9007418

(56) References cited:
- JP-A- 6 216 127
- No further relevant documents have been disclosed.

## Description

This invention relates to techniques of applying a lining material on the inner surface of a pipeline such as a gas conduit, a city water pipeline, a sewer conduit, a conduit in which power cables or communication cables are laid or a petroleum pipeline and particularly an underground pipeline, for the purposes of maintenance, repairs and/or reinforcement.

Methods of applying the inner surfaces of such pipelines or conduits with a lining material have been used of late years for the purposes of maintenance, repairs and/or reinforcement of various kinds of conduits such as city water pipelines, sewer conduits, gas conduits, conduits in which power cables or communication cables are laid or petroleum pipelines when they have deteriorated due to long years of use. As such a lining method, it has been carried out to apply previously an adhesive or a binder on the inner surface of a tubular flexible lining material, insert the lining material into a pipeline while the lining material is being turned inside out by the action of a fluid pressure, press the evaginated surface of the lining material against the inner surface of the pipeline through the action of the above-mentioned fluid pressure, and adhesively bond the inner surface of the lining material onto the inner surface of the pipeline.

However, in case such a lining method is applied to a pipeline having one or more branched portions to line the inner surface thereof, at the initial stage the lining material is adhesively bonded onto the whole inner surface of the pipeline, and as a result, the openings of branched pipes formed in the main pipeline are also covered by the lining material, i.e., blocked thereby. At the next or second stage, the lining material layers covering the openings of the branched pipelines are removed by boring the same by means of a borer to thereby enable the branched pipes to communicate with the main pipeline. Upon effecting such a lining operation, if at the abovementioned initial stage the lining material is adhesively bonded onto the whole inner surface of the main pipeline, then the adhesive flows from the openings into the branched pipes where it solidifies thus forming a thick solidified adhesive layer in the openings of the branched pipes. Therefore, in case the lining material is bored by means of a borer at the above-mentioned second stage, such a thick solidified adhesive layer has to be removed, and such operations accompany many difficulties. To avoid such difficulties, upon effecting adhesive bonding of a lining material onto the inner surface of a main pipeline at the initial stage of lining operation, it has so far been carried out to cover previously the openings of branched pipes in branched portions with sealing materials, and conduct lining material bonding operation, and upon boring the portions of the lining material layer covering the openings at the above-mentioned second stage, remove the above-mentioned sealing material together with each of the portions of the lining material.

A first object of the present invention is to provide an efficient apparatus for blocking each of openings of branched pipelines formed in branched portions of a main pipeline with a plug. Further, the present invention has for its second object to provide an efficient plug for use in blocking the openings of such branched pipes.

As an apparatus for blocking openings of branched pipes in branched portions with sealing materials in the above-mentioned operation, there is heretofore known the one described in JP-A-62-16127. This apparatus comprises a base, on which sealing materials or plugs for blocking openings of branched pipes in branched portions of a pipeline are placed, the base being mounted on an operating machine, that is movable through the pipeline, in such a manner that it may be turned about the longitudinal axis of the pipeline and also moved radially of the pipeline.

This apparatus is disadvantageous in that, since it can put only one piece of sealing material or plug thereon, each time one of the openings of the branched pipes has been blocked with the plug, the whole apparatus itself needs to be taken or moved out to put thereon a separate plug for use in blocking the next opening.

Stating this disadvantage in more detail, in general, most of various kinds of conduits and pipelines such the above-mentioned gas conduits, city water pipelines and sewers, etc. have a plurality of branched pipelines extending therefrom in the regions close to the terminal ends thereof. For example, low pressure pipelines of gas conduits are buried in the ground under city roads to supply a city gas through branched pipelines thereof to neighboring houses and buildings, and stating more specifically many branched pipelines extend usually from a main pipeline at short intervals. Further, the above-mentioned condition on the distribution of branched pipelines at terminal ends of gas conduits holds true of city water pipelines and sewer conduits.

If and when the apparatus described in the above-mentioned JP-A-62-16127 is used for a pipeline having a plurality of branched pipes extending therefrom at short intervals between them, each time one of the openings of the branched pipes has been blocked with a plug, extremely inefficient operations of taking the apparatus once out of the pipeline and placing thereon a new plug for blocking the next opening have to be carried out.

The main object of the present invention is to provide an apparatus according to claim 1 and a plug according to claim 2.

In the first place, according to the present invention, there is provided an efficient apparatus as described in detail hereinbelow. Reference numerals are used in the following description for easier reference of drawings.

The present invention provides an apparatus for blocking openings of branched pipes in branched portions of a pipeline, adapted for use prior to operation of lining the inner surface of the pipeline having the branched portions, characterized in that it comprises:
a base 11 mounted on a turning unit 7 in such a manner that it may be moved radially of the pipeline 1 relative to the turning unit 7, the turning unit 7 being mounted on an operating machine body 4 movable in the pipeline 1 in such a manner that it may be turned about the longitudinal axis of the pipeline 1;
a sliding member 12 consisting of a sliding rod 14 slidably supported in the base 11 and a plate 13;
a spring means 15 for biasing normally the sliding member 12 upwardly relative to the base 11;
a plate 16 fixedly secured to the base 11 through lower struts 17 secured to the base 11 so that it may pass through the plate 13; and
a plug housing member 18 formed by the plate 16 and a plurality of upper struts 19 fixedly secured thereto,
each of the upper struts 19 having a slit 21 formed in the upper half portion thereof, the slit 21 having a wire spring 22 fitted therein, a portion of the wire spring 22 projecting inwardly of the plug housing member 18, the arrangement being made such that a plurality of plugs 20 are held by the plurality of upper struts 19 and the plate 16.

In the second place, according to the present invention, there is provided a plug for blocking each of openings of branched pipes by means of the above-mentioned blocking apparatus.

This plug is characterized in that it comprises a disc-shaped body 23 whose diameter is slightly larger than the inside diameter of each of the openings of the branched pipes in the branched portions of the main pipeline, the disc-shaped body having a projecting portion 25 formed on one side thereof and having such a shape as to be engageable with the inner surface of the branched pipe through the action of a frictional force between them, the disc-shaped body 23 further having cut-away portions 24 formed in the outer periphery thereof, each of the cut-away portions 24 having such a shape that each one of the struts 19 in the above-mentioned blocking apparatus can be fitted loosely therein, all the disc-shaped body and the projecting portion are formed integrally of a plastic material.

In the third place, according to the present invention, there is provided a plug having an improved construction over that of the above-mentioned plug and which will be described below.

This plug having an improved construction is characterized by incorporating the following requirements (1), (2) and/or (3).
(1) The above-mentioned disc-shaped body 32 shall have a spherical, convex portion 36 formed integrally on the surface thereof on the opposite side of the surface provided with a projecting portion 34.
(2) The above-mentioned disc-shaped body 32 shall have a sealing member 37 which is adhesively bonded onto the surface thereof provided with the projecting portion 34 and which extends circumferentially of and around the projecting portion.
(3) The above-mentioned disc-shaped body 32 shall have a curved shape 32' which is the same as that of the inner surface of the main pipeline in each of the branched portions to be blocked with the plugs.

The apparatus of the present invention will now be described hereinbelow with reference to the accompanying drawings.

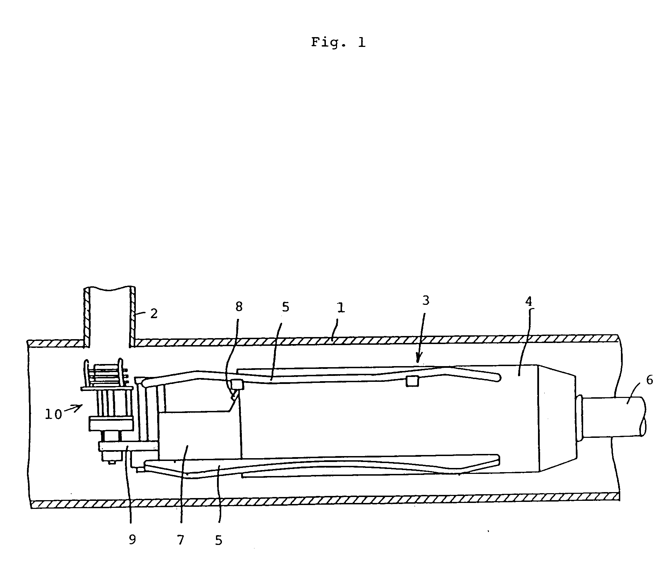

Fig. 1 shows the relationship between the blocking apparatus of the present invention and the whole operating machine.

Reference numeral 1 denotes a pipeline, and 2 a branched pipe extending from the pipeline 1. Reference numeral 3 denotes an operating machine adapted to be inserted into the pipeline 1 and slidably moved therethrough by a slid 5 mounted on the operating machine body 4 when a rod 6 or wire or the like connected to the rear portion of the body is pulled.

The operating machine body 4 has a turning unit 7 mounted on the front portion thereof in such a manner that it may be turned about the longitudinal axis of the pipeline 1 relative to the body 4. The turning unit 7 has a television camera 8 mounted thereon.

Further, the front portion of the turning unit 7 has a movable member 9 mounted thereon in the manner such that it may be slidably moved vertically in the drawing relative to the turning unit 7; that is; radially of the pipeline 1. The arrangement is made such that all of the movement of the operating machine 3 through the pipeline, turning of the turning unit 7 relative to the body 4, and the sliding movement of the movable member 9 relative to the turning unit 7 can be remotely controlled outside of the pipeline while monitoring their images on the screen of the television camera 8.

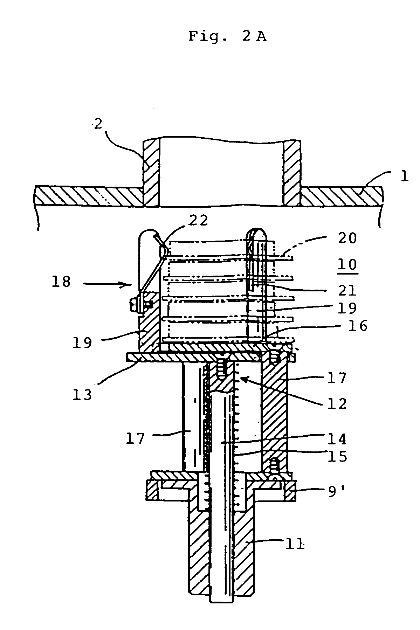

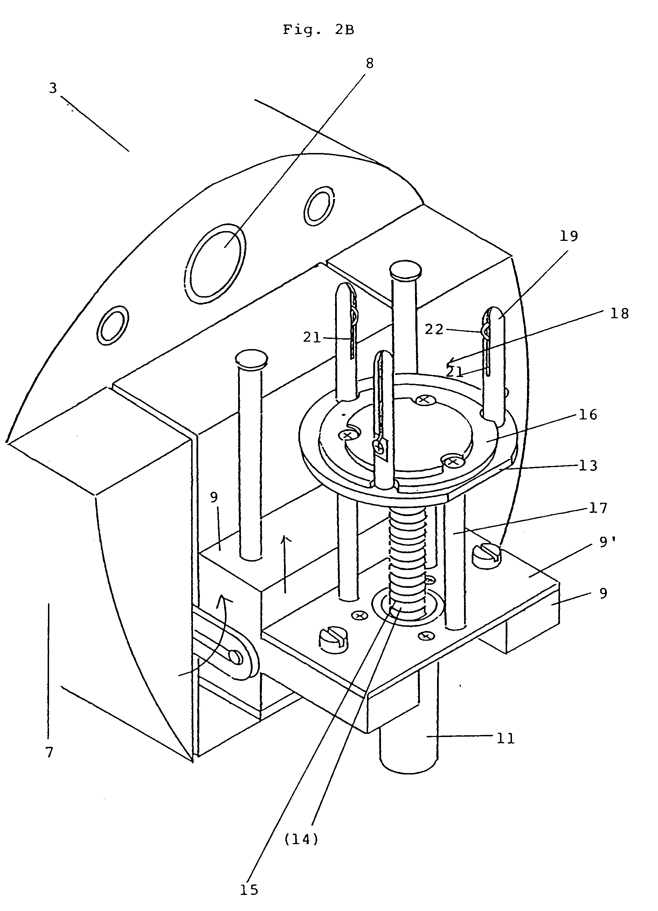

Fig. 2A and 2B are explanatory views showing the details of the blocking apparatus according to the present invention.

The base 11 is detachably mounted through a plate 9' on the movable member 9 and fixedly secured thereto in such a manner that it may be moved together with the movable member 9 as an integral unit thereof.

The sliding member 12 is comprised of the first plate 13 and the sliding rod 14. The sliding rod 14 is supported in the above-mentioned base 11 so as to slidably move freely in the vertical direction in the drawing relative to the base 11. Further, the sliding member 12 is normally biased by the spring means 15 upwards relative to the base 11.

The second plate 16 is placed on the upper surface of the above-mentioned plate 13 and fixedly supported by the struts 17 extending through the plate 13, relative to the base 11. Thus, the above-mentioned sliding member 12 is biased upwards by the spring means 15 so that the upper surface of the plate 13 is pressed against the plate 16.

Further, the above-mentioned sliding member 12 has a plug housing member 18 formed on the upper part thereof. The plug housing member 18 comprises the plate 16 and a plurality of struts 19 which stand upright around the plate 16. The arrangement is made such that a stack of a plurality of plugs 20 can be accommodated in the space defined by the struts 19 and held thereby. And, the above-mentioned plate 16 constitutes the bottom of the plug housing member 18.

Each of the above-mentioned struts 19 has the slit 21 formed in the upper half portion thereof and in which the wire spring 22 is fitted. A portion of each of the wire springs 22 projects inwardly to hold resiliently the plugs 20 accommodated along the struts 19.

Next, the plug for blocking each of the openings of the branched pipes adapted for use in the apparatus of the present invention will be described with reference to the drawings.

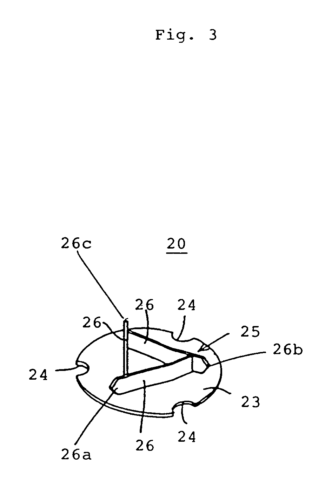

Fig. 3 shows one embodiment of the plug according to the present invention.

The plug 20 has such a shape as shown in Fig. 3, and is formed integrally of a plastic material. This plug comprises the disc-shaped body 23 whose diameter is slightly larger than the inside diameter of the branched pipe 2 to be blocked by the apparatus of the present invention. This disc-shaped body 23 has a plurality of cut-away portions 24 formed along the peripheral edge thereof at regular intervals so that each of the struts 19 of the plug housing member 18 of the blocking apparatus can be fitted loosely in each of the cut-away portions 24. Further, the disc-shaped body 23 has a projecting portion 25 formed on the upper surface thereof and which has such a shape as to be fitted tightly in the inner surface of the branched pipe 2. In the embodiment shown in Fig. 3, the projecting portion 25 is formed by three pieces of strip-shaped ribs 26 assembled with one another as shown. The leading end of each of the ribs 26 projects outwardly so as to define the apex of a triangle thus forming tapered pressure contact portions 26a, 26b and 26c. The arrangement is made such that the extreme ends 26a, 26b and 26c are engageable with the inner surface of the branched pipe 2 and held tightly in the end of the opening of the branched pipe 2 formed in the main pipeline.

While in this embodiment the projecting portion 25 is formed by three pieces of ribs 26 assembled in a triangular shape, it may be formed in any desired shape provided that it has such a configuration as to be engageable with the inner surface of the branched pipe 2 at the branched portion through the action of a frictional force.

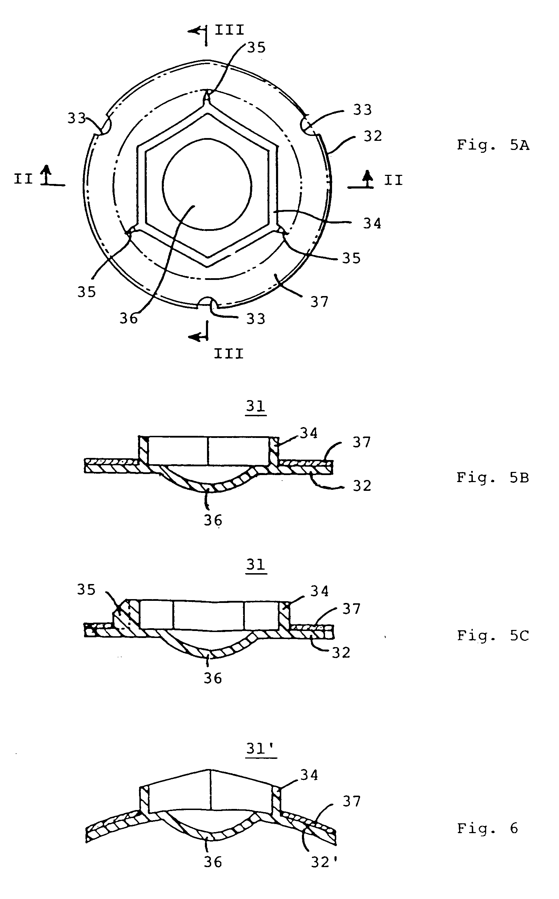

Figs. 5A, 5B, 5C and 6 show further embodiments of the improved plug of the present invention.

Plugs 31 and 31' are each formed integrally of a plastic material and comprise disc-shaped bodies 32 and 32', respectively, which have a diameter slightly larger than the inside diameter of the branched pipe 2 and also have cut-away portions 33 formed along the periphery of their bodies. Further, the cut-away portions 33 are formed to apply the above-mentioned blocking apparatus, it is not always indispensable to form them in terms of the function of the plug for use in blocking a branched pipe at a branched portion.

Further, each of the above-mentioned disc-shaped bodies 32 and 32' has a projecting portion 34 formed on the upper surface thereof and having such a shape as to be fitted tightly in the inner surface of a branched pipe. Thus, in Figs. 5A, 5B and 5C, the projecting portion 34 has a substantially hexagonal shape in plan view. The projecting portion 34 has pressure contact portions 35 formed at positions corresponding to three apexes of the hexagon so that they can be engaged tightly with the inner surface of a branched pipe through the action of a frictional force exerted between them.

Further, each of the disc-shaped bodies 32 and 32' has a spherical, convex portion 36 formed in the central area of the lower surface thereof.

Moreover, each of the above-mentioned disc-shaped bodies 32 and 32' has a sealing member 37 of a elastomer such as, for example, rubber adhesively bonded onto the upper surface thereof and around the outer periphery of the projecting portion 34. The upper surface of the sealing member 37 is applied with an adhesive or binder as the case may be.

Fig. 6 is a sectional view of another embodiment of the plug having an improved shape. This plug has a disc-shaped body 32' having a curved shape which is the same as that of the inner surface of a main pipeline in a branched portion to be blocked. The above-mentioned projecting portion 34 is formed on the curved surface on the opposite side of the convex portion.

As shown in Fig. 2, when the blocking apparatus 10 of the present invention is in its inoperative condition, the sliding member 12 occupies its upper position relative to the base 11, and the plate 13 is abutted against the lower surface of the plate 16 by the resilient force of the spring means 15. Thus, the struts 19 project upwardly above the plate 16 to a maximum extent. In Figs. 2A and 2B, a plurality of plugs 20 are accommodated in the plug housing member 18.

Since the plugs 20 are held by the wire springs 22, they are fixedly secured in the plug housing member 18 so that even when the blocking apparatus 10 is inclined or directed laterally or downwardly from its position shown in Figs. 1, 2A and 2B, according to the connecting position of the branched pipe 2, there is no risk of the plugs 20 dropping out from the plug housing member 18.

The operation of this blocking apparatus is carried out as follows.

The operating machine 3 with a plurality of plugs 20, 31 or 31' accommodated in the plug housing member 18 of the blocking apparatus 10 is inserted into the pipeline 1 and moved therethrough by operating the rod 6 or the like, while the operator is viewing the inside of the pipeline 1 by means of the television camera 8 to search for the opening of the branched pipe 2.

The position of the operating machine 3 is adjusted by the operator while viewing the image on the screen of the television camera 8, and as occasion demands the turning unit 7 is turned so as to locate the blocking apparatus 10 at the position of the opening of the branched pipe 2.

When the apparatus 10 is located below the opening of the branched pipe 2, the movable member 9 of the operating machine 3 is moved upwards in the drawing so that the base 11 fixedly secured to the movable member 9 is moved upwards accompanying with upward movement of the sliding member 12.

The leading ends of the struts 19 are first abutted against the leading end face of the branched pipe 2. When the movable member 9 is moved further upwardly from that condition, the sliding member 12 cannot be moved upwards because the leading ends of the struts 19 are held by the leading end face of the branched pipe 2 around the opening. Thus, the base 11 is moved upwards relative to the sliding member 12 while compressing the spring means 15 so that the plate 16 fixedly secured to the base 11 is moved upwardly away from the plate 13. As a result, the group of plugs 20 resting on the plate 16 is pushed up along the struts 19.

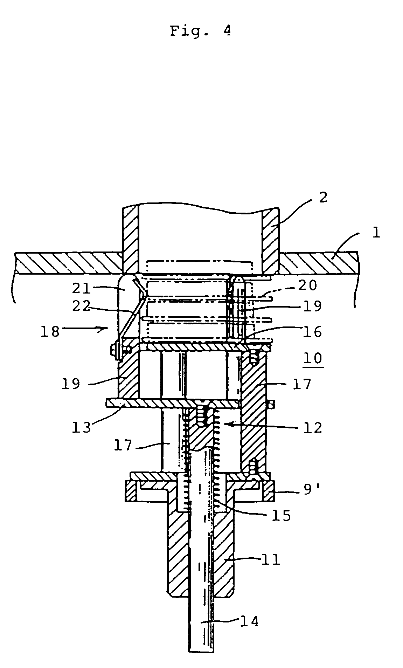

The plugs 20, 31 or 31' are moved upwards while spreading the wire springs 22 mounted on the struts 19, respectively. Thereupon, the projecting portion 25 or 34 of the uppermost plug is fitted in the inner surface of the opening of the branched pipe 2 so that the projecting portion is engaged with the inner surface of the branched pipe 2 and held thereby. Thus, the plug is held at the branched portion so as to cover the opening of the branched pipe 2 by the disc-shaped body. This condition is illustrated in Fig. 4.

When the movable member 9 is moved down subsequently, only the base 11 is moved down together with the plate 16 while the leading ends of the struts 19 remain to be pressed against the leading end face of the branched pipe 2. When the plate 16 is abutted against the upper surface of the plate 13, the sliding member 12 is also moved down so that the whole blocking apparatus is returned eventually to its initial condition as shown in Fig. 2.

Then, out of the group of plugs accommodated previously in the plug housing member 18, the uppermost plug remains to be held in the opening of the branched pipe 2, and the rest of the plugs accommodated in the plug housing member 18 will be moved down together with the sliding member 12.

The opening of one of the branched pipes is blocked with the plug by the above-mentioned operation. Subsequently, the operating machine 3 is moved in turn to each of the openings of the branched pipes where the same operation is repeated, so that one piece of the plug is fitted in turn in each of the openings of branched pipes 2 thus blocking them. Therefore, by inserting the operating machine 3 once into the pipeline 1, the openings of branched pipes corresponding in number to the plugs accommodated in the plug housing member 18 can be blocked.

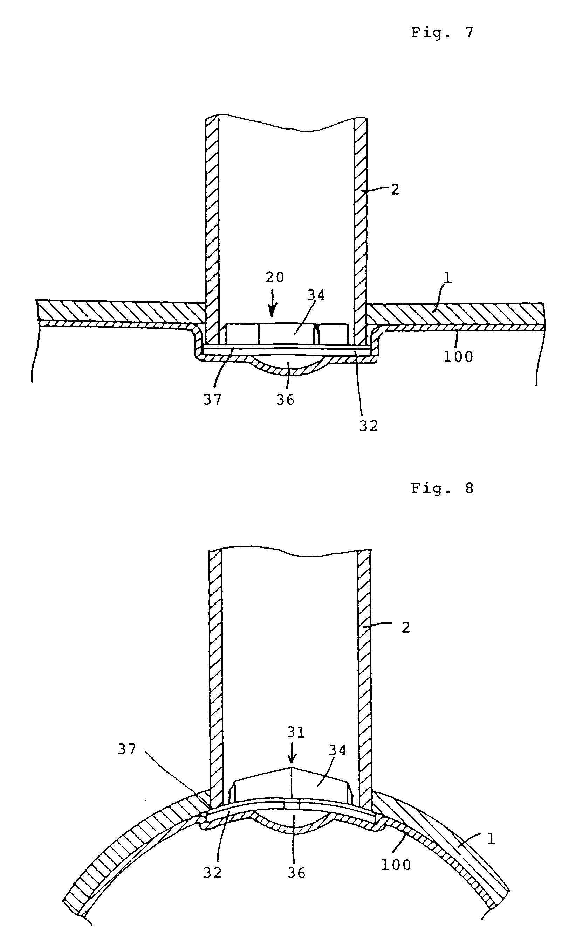

After all the openings of branched pipes in the pipeline 1 have been blocked, the inner surface of the pipeline 1 is lined with a lining material according to a publicly known method. The condition of the pipeline which has been lined is illustrated in Figs. 7 and 8.

After the completion of the lining operation, the base 11 is removed from the movable member 9 mounted on the turning unit 7, and then a proper boring device is mounted onto the operating machine 3 in place of the blocking apparatus 10. Then, the operating machine 3 is inserted again into the lined pipeline. Subsequently, by driving the boring device, only the portions of the lining material adhesively bonded on the inner surface of the pipeline covering each of the openings of branched pipes are removed together with the plug 20, 31 or 31'. Thus, the branched pipes 2 are communicated with the pipeline 1. As a boring device for use in boring the lining material covering the branched portions of the pipeline, various kinds of constructions using a drill, a striker or a heating iron are proposed, and a proper one may be used as the borer. If, for example, it is desired to burn off the lining material covering the openings of the branched pipes by using a heating-iron type borer, then an EVA resin whose melting point is low should preferably be selected, because this resin can be readily bored, and can seal the periphery of holes formed in the lining material layer.

Further, if a plug having a convex portion 36 formed in the central, lower surface thereof like the plugs 31 and 31' shown in Figs. 5 and 6 is used, when the inner surface of the lined pipeline is observed by the operator by means of the television camera 8, the projecting condition of the lining material layer 100 at the position of the opening of the branched pipe 2 can be easily confirmed through its image on the screen of the television camera. Therefore, it is convenient to use such a type of plug to find out the location of the opening.

Further, by using a plug with abraded lower surface, an enhanced adhesivity can be achieved between the lower surface and the lining material layer 100 so that leakage of fluid after the boring operation can be prevented.

In the condition shown in Fig. 7, the leading end of the branched pipe 2 projects inwardly from the inner surface of the pipeline 1, and the end face thereof is generally planar. In such a case, a plug having a flat-plate type disc-shaped body 32 as shown in Figs. 5A, 5B and 5C is used, and the branched portion can be blocked with this plug by engaging it with the inner surface of the branched pipe 2.

Whilst, in case the inner end of the branched pipe 2 is cut flush with the inner surface of the pipeline 1 as shown in Fig. 8, or in case the branched pipe 2 is welded to the periphery of a bored hole in the pipeline 1, the opening of the branched pipe cannot be blocked satisfactorily with the plug as shown in Fig. 5. In such a case, a plug having a curved disc-shaped body as shown in Fig. 6 is used, and this plug is fitted in the branched portion along the inner surface of the pipeline 1.

According to the blocking apparatus of the present invention, since when the inner surface of the pipeline 1 is lined with a lining material the openings of branched pipes in branched portions of the pipeline 1 have previously been blocked satisfactorily with plugs, there is no risk of an adhesive for bonding the lining material flowing into the branched pipe 2 resulting in formation of a thick solidified adhesive layer, which impedes boring operation, in the branched pipe 2. Therefore, in the subsequent process of boring the lining material covering the openings of branched pipes, it is sufficient to remove only the thin lining material and the plugs 20, 31 or 31' by boring, and so the lining material covering the openings can be bored easily in a short time.

Further, since the plug housing member 18 can accommodate a plurality of plugs, when the operating machine 3 is once inserted into the pipeline 1, a plurality of openings of branched pipes can be blocked continuously with the plugs, and so the operational efficiency can be improved significantly.

The plug according to the present invention can be fitted into the opening of a branched pipe very easily by a simple operation to block the branched portion of a pipeline, and after fitting there is almost no possibility of the plug dropping out of the plug housing member.

Further, since the plug according to the present invention has a sealing member 37 bonded onto the upper surface thereof, even if the inner surface of the branched portion is somewhat irregular, the plug is pressed tightly against the inner surface along the irregularities through deformation of the sealing member 37, so that the branched portion can be sealed satisfactorily.

Further, as mentioned hereinabove, when the plug whose sealing member 37 is applied with an adhesive or binder on the upper surface thereof is used, not only drop-out of the plug while blocking the opening of a branched pipe can be prevented, but also the branched portion can be sealed satisfactorily, thus preventing the ingress of the adhesive into the branched pipe effectively.

As a result, there is no possibility of formation of thick solidified adhesive layer in the branched pipe, which impedes the subsequent boring operation.

Further, since the projecting portion 35 is of such a shape as to be fitted properly into the branched pipe, the branched portion can always be blocked surely with the plug.

Furthermore, after completion of the lining operation the position of the branched portion can be found out easily and exactly by viewing the image of the convex portion 36 formed on the lower surface of the disc-shaped body on the screen of the television camera, which offers convenience to the operation of boring the lining material covering the openings of branched portions.
Fig. 1 is a side elevational view showing the relationship between the blocking apparatus of the present invention and the whole operating machine;
Figs. 2A and 2B show the blocking apparatus of the present invention in inoperative condition;
Fig. 2A is a central, longitudinal sectional view of the blocking apparatus;
Fig. 2B is a perspective view of the same;
Fig. 3 is a perspective view showing one embodiment of the plug according to the present invention;
Fig. 4 is a central, longitudinal sectional view of the blocking apparatus of the present invention in operative condition;
Figs. 5A, 5B and 5C show other embodiments of the improved plug of the present invention;
Fig. 5A is a plan view of the plug;
Fig. 5B is a sectional view of the plug taken along line II - II in Fig. 5A;
Fig. 5C is a sectional view of the plug taken along line III - III in Fig. 5A;
Fig. 6 shows a further embodiment of the improved plug of the present invention, and the plan view of the plug of this embodiment is substantially the same as that shown in Fig. 5A;
Fig. 7 is a central, longitudinal sectional view showing the condition of the pipeline in the lengthwise direction after completion of lining operation wherein the opening of the branched pipe in the branched portion of the main pipeline is fitted and blocked with the plug shown in Fig. 5A, 5B or 5C; and
Fig. 8 is a cross-sectional view of the branched portion of the main pipeline after completion of lining operation wherein the opening of the branched pipe is fitted and blocked with the plug shown in Fig. 6.

## Claims

1. An apparatus for blocking openings of branched pipes in branched portions of a pipeline (1), being used before the lining of the inner surface of the pipeline (1) having the branched portions, characterized in that it comprises:
a base (11) mounted on a turning unit (7) in such a manner that it may be moved radially, the turning unit (7) being mounted on an operating machine body (4) movable in the pipeline (1) in such a manner that it may be turned about the longitudinal axis of the pipeline (1);
a sliding member (12) made of a rod (14) slidably supported in the base (11) and of a first plate (13);
spring means (15) for biasing the sliding member (12) upwards relative to the base (11);
a second plate (16) fixedly secured to the base (11) by lower struts (17) secured to the base (11) so that it may pass through the first plate (13); and
a plug housing member (18) composed of the second plate (16) and a plurality of upper struts (19) fixedly secured thereto,
each of the upper struts (19) having a slit (21) formed in the upper half portion thereof, the slit (21) having a wire spring (22) fitted therein, a portion of the wire spring (22) projecting inwards in the plug housing member (18), the arrangement being made so that a plurality of plugs (20) are held by the plurality of the upper struts (19) and the second plate (16).

2. A plug for blocking each of the openings of branched pipes during the lining of the inner surface of a pipeline having branched portions, comprising a disc-shaped body whose diameter is slightly larger than the inside diameter of each of the openings of the branched pipes in the branched portions of the main pipeline, the disc-shaped body having a projecting portion formed on one side thereof and having such a shape as to be engageable with the inner surface of the branched pipe through the action of a frictional force between them, the disc-shaped body further having cut-away portions formed in the outer periphery thereof, each of the cut-away portions having such a shape that each one of the struts in the blocking apparatus as set forth in Claim 1 can be fitted loosely therein, the disc-shaped body and the projecting portion being formed integrally of a plastic material.

3. A plug for blocking each of openings of branched pipes as claimed in Claim 2, wherein said disc-shaped body has a convex portion formed integrally on the surface on the opposite side of the surface provided with the projecting portion.

4. A plug for blocking each of openings of branched pipes as claimed in Claim 2 or 3, wherein said disc-shaped body has a sealing member which is adhesively bonded onto the surface thereof provided with the projecting portion and which extends circumferentially of and around the projecting portion.

5. A plug for blocking each of openings of branched pipes as claimed in any of Claims 2 to 4, wherein said disc-shaped body has a curved shape which is the same as that of the inner surface of the main pipeline in each of the branched portions to be blocked with the plugs.

## Patentansprüche

1. Gerät zum Verschließen von Öffnungen von Zweigrohren in Verzweigungsbereichen einer Rohrleitung (1), das vor dem Auskleiden der Innenfläche der die Verzweigungsbereiche aufweisenden Rohrleitung (1) verwendet wird, gekennzeichnet durch:
eine Basis (11), die auf einer drehbaren Einheit (7) derartig angebracht ist, daß sie radial bewegt werden kann, wobei die drehbare Einheit (7) auf einem in der Rohrleitung (1) beweglichen Arbeitsmaschinenrumpf (4) derartig angebracht ist, daß sie um die Längsachse der Rohrleitung (1) gedreht werden kann;
ein verschiebbares Teil (12), das aus einer in der Basis (11) verschiebbar gelagerten Stange (14) und einer ersten Platte (13) besteht;
eine Federeinrichtung (15), damit das verschiebbare Teil (12) nach oben relativ zur Basis (11) gedrückt wird;
eine zweite Platte (16), die mittels an der Basis (11) angeordneter unterer Streben (17) so an der Basis (11) fest angeordnet ist, daS sie durch die erste Platte (13) hindurchpaßt; und
ein Stöpselaufnahmeteil (18), das aus der zweiten Platte (16) und mehreren darauf befestigten oberen Streben (19) besteht,
wobei jede der oberen Streben (19) einen in ihrer oberen Hälfte ausgebildeten Schlitz (21) aufweist, wobei der Schlitz (21) eine darin eingepaßte Drahtfeder (22) aufweist, wobei ein Bereich der Drahtfeder (22) in das Stöpselaufnahmeteil (18) hineinragt, wobei die Anordnung so gestaltet ist, daS mehrere Stöpsel (20) durch die mehreren oberen Streben (19) und die zweite Platte (16) gehalten werden.

2. Stöpsel zum Verschließen jeder der Öffnungen von Zweigrohren während des Auskleidens der Innenfläche einer Rohrleitung mit Verzweigungsbereichen, der einen scheibenförmigen Körper aufweist, dessen Durchmesser etwas größer als der innere Durchmesser der jeweiligen Öffnungen der Zweigrohre in den Verzweigungsbereichen der Hauptleitung ist, wobei der scheibenförmige Körper einen auf einer Seite ausgebildeten vorspringenden Bereich aufweist und eine solche Form besitzt, daß er durch die Wirkung einer Reibungskraft zwischen ihnen in die Innenfläche des Zweigrohrs eingreifbar ist, wobei der scheibenförmige Körper ferner ausgeschnittene Bereiche aufweist, die an seinem Außenrand ausgebildet sind, wobei jeder der ausgeschnittenen Bereiche derart geformt ist, daß jede der Streben im Verschließgerät gemäß Anspruch 1 dort beweglich eingefügt werden kann, wobei der scheibenförmige Körper und der vorspringende Bereich einstückig aus einem Kunststoffmaterialmaterial ausgebildet werden.

3. Stöpsel zum Verschließen jeder der Öffnungen von Zweigrohren nach Anspruch 2, wobei der scheibenförmige Körper einen gewölbten Bereich aufweist, der einstückig auf der Oberfläche auf der gegenüberliegenden Seite der mit dem vorspringenden Bereich versehenen Oberfläche ausgebildet ist.

4. Stöpsel zum Verschließen jeder der Öffnungen von Zweigrohren nach Anspruch 2 oder 3, wobei der scheibenförmige Körper ein Dichtungsteil aufweist, das auf seine mit dem vorspringenden Bereich versehene Oberfläche aufgeklebt ist und sich rings um den vorspringenden Bereich erstreckt.

5. Stöpsel zum Verschließen jeder der Öffnungen von Zweigrohren nach Anspruch 2 bis 4, wobei der scheibenförmige Körper eine gekrümmte Form aufweist, die dieselbe wie die der Innenfläche der Hauptleitung in jedem der mit den Stöpseln zu verschließenden Verzweigungsbereiche ist.

## Revendications

1. Dispositif pour bloquer des ouvertures de conduites à embranchements dans des portions à embranchements d'un pipeline (1), utilisé pour le revêtement de la surface interne du pipeline (1) comportant les portions à embranchements, caractérisé en ce qu'il comprend:
une base (11) montée sur une unité rotative (7) de manière qu'elle puisse être déplacée radialement, l'unité rotative (7) étant montée sur le corps (4) d'une machine d'actionnement mobile dans le pipeline (1) de façon qu'elle puisse être tournée autour de l'axe longitudinal du pipeline (1);
un organe coulissant (12) constitué d'une tige (14) supportée de façon coulissante dans la base (11) et d'une première plaque (13);
un moyen à ressort (15) pour solliciter l'organe coulissant (12) vers le haut par rapport à la base (11);
une seconde plaque (16) fixée fermement à la base (11) par des supports (17) disposés en dessous de manière qu'elle puisse passer à travers la première plaque (13);
un organe de logement d'obturateur (18) composé de la seconde plaque (16) et de plusieurs entretoises supérieures (19) qui sont fermement fixées sur elles,
chacune des entretoises supérieures (19) comprenant une fente (21) formée dans sa demi-portion supérieure, la fente (21) contenant un ressort en fil (22) disposé à l'intérieur, une portion du ressort en fil (22) faisant saillie vers l'intérieur de l'organe de logement d'obturateur (18), l'agencement étant réalisé de manière que plusieurs obturateurs (20) soient maintenus par plusieurs entretoises supérieures (19) et par la seconde plaque (16).

2. Obturateur pour bloquer chacune des ouvertures de conduites de branchement pendant le revêtement de la surface interne d'un pipeline comprenant des portions à embranchements, comportant un corps en forme de disque dont le diamètre est légèrement plus grand que le diamètre interne de chacune des ouvertures des conduites de branchement dans les portions à embranchements du pipeline principal, le corps en forme de disque comprenant une portion en saillie formée sur l'un de ses côtés et ayant une forme telle qu'il peut venir en engagement avec la surface interne de la conduite de branchement sous l'action d'une force de friction entre eux, le corps en forme de disque comportant en outre des portions découpées formées dans sa périphérie externe, chacune des portions découpées ayant une forme telle que chacune des entretoises du dispositif de blocage indiqué dans la revendication 1 peut être disposée de façon libre à l'intérieur, le corps en forme de disque et la portion en saillie étant formés d'un seul tenant en une matière plastique.

3. Obturateur pour bloquer chacune des ouvertures de conduites de branchement selon la revendication 2, dans lequel ledit corps en forme de disque comprend une portion convexe formée d'un seul tenant sur la surface du côté opposé à la surface munie de la portion en saillie.

4. Obturateur pour bloquer chacune des ouvertures de conduites de branchement selon la revendication 2 ou 3, dans lequel ledit corps en forme de disque comprend un élément d'étanchéité qui est collé par un adhésif sur sa surface qui est munie de la portion en saillie et qui s'étend circonférentiellement sur et autour de la portion en saillie.

5. Obturateur pour bloquer chacune des ouvertures de conduites de branchement selon l'une quelconque des revendications 2 à 4, dans lequel ledit corps en forme de disque présente une forme courbe qui est la même que celle de la surface interne du pipeline principal dans chacune des portions à embranchements à bloquer au moyen des obturateurs.
